# EUROPEAN PATENT SPECIFICATION

(11) **EP 4 491 597 B1**
(45) Date of publication and mention of the grant of the patent: **22.04.2026**
(21) Application number: 24186553.4
(22) Date of filing: 04.07.2024
(51) Int. Cl.: C04B 28/00, C04B 20/10, C04B 41/45

(54) **GEOPOLYMER COMPOSITE MATERIALS EMBEDDED WITH COATED FIBROUS REINFORCEMENT MATERIALS**
GEOPOLYMERVERBUNDSTOFFE MIT BESCHICHTETEN FASERVERSTÄRKUNGSMATERIALIEN
MATÉRIAUX COMPOSITES GÉOPOLYMÈRES ENROBÉS DE MATÉRIAUX DE RENFORCEMENT FIBREUX REVÊTUS

(30) Priority: 11.07.2023 US 202318350165
(43) Date of publication of application: 15.01.2025
(60) Divisional application: 26165126.9
(73) Proprietor: General Electric Company, Evendale, OH 45215 (US); GE Aerospace Poland sp. z o.o., 02-256 Warszawa (PL)
(72) Inventor: JASICZEK, Michal, 02-256 Warsaw (PL); SINHA, Shatil, Niskayuna, 12309 (US); KESHAVAN, Hrishikesh, 560066 Bengaluru (IN); GEMEINHARDT, Gregory Carl, Evendale, 45215 (US); GRAVES, John Harvey, Lynn, 01910 (US); LIN, Wendy Wenling, Evendale, 45241 (US)
(74) Representative: Openshaw & Co.

(56) References cited:
- WO-A1-88/02741
- WO-A2-02/24596
- CN-A- 101 182 152
- CN-A- 114 914 320
- ALZEER MOHAMMAD ET AL: "Synthesis and mechanical properties of novel composites of inorganic polymers (geopolymers) with unidirectional natural flax fibres (phormium tenax)", APPLIED CLAY SCIENCE, ELSEVIER, AMSTERDAM, NL, vol. 75, 8 April 2013 (2013-04-08), pages 148 - 152, XP028582677, ISSN: 0169-1317, DOI: 10.1016/J.CLAY.2013.03.010
- DAVIDOVITS J ET AL: "GEOPOLYMER: ULTRA-HIGH TEMPERATURE TOOLING MATERIAL FOR THE MANUFACTURE OF ADVANCED COMPOSITES", INTERNATIONAL SAMPE SYMPOSIUM AND EXHIBITION, XX, XX, vol. 36, no. 2, 15 April 1991 (1991-04-15), pages 1939 - 1949, XP000571780

## Description

### FIELD

The present subject matter relates generally to composite materials and more particularly to geopolymer composite materials that can be used in various aerospace applications.

### BACKGROUND

Gas turbine engines, often used in many aerospace applications, have an increased demand for high temperature, light weight components. For example, applications having a high temperature resistance, e.g., up to 1000 Celsius (°C), low density, and good mechanical properties have become increasingly popular. Traditionally, polymer matrix composites (PMCs) have been utilized to produce light weight structures. For example, carbon fiber epoxy, polyimide, bismaleimide or cyanate ester composites are used in various engine applications, but such materials can generally only withstand maximum operating temperatures up to 300 °C.
Ceramic matrix composites (CMCs) can be used in higher temperature applications (e.g., in excess of 1600 °C), however, such materials have limited structural performance. Moreover, the cost and processing times of CMCs can also be prohibitive when considering applications in high temperature components. In addition, the mass penalty of CMCs as compared to traditional PMCs can be significant and thus their use has been limited. Therefore, there is a need for materials that aid in manufacturing high temperature components.

CN 114 914 320 discloses a polymer composite material, comprising:
- a thermoplastic resin (PP); and
- a coupling agent (silane) coated fibrous reinforcement material (e.g. glass fiber) impregnated with the thermoplastic resin.

WO 88/02741 A1 discloses a method of manufacturing a geopolymer composite material, the method comprising:
- preparing a geopolymer resin;
- impregnating fibrous reinforcement material with the geopolymer resin to form a prepreg;
- laying up the impregnated fibrous reinforcement material; and
- optionally curing the impregnated fibrous reinforcement material to form a solid matrix of the geopolymer composite material.

### BRIEF DESCRIPTION OF THE DRAWINGS

A full and enabling disclosure of the presently described technology, including the best mode thereof, directed to one of ordinary skill in the art, is set forth in the specification, which refer to the appended figures, in which:
FIG. 1 illustrates a top view of an aircraft according to various exemplary embodiments of the present disclosure.
FIG. 2 illustrates a port side view of the exemplary aircraft of FIG. 1.
FIG. 3 illustrates a cross section view of an engine of an aircraft in accordance with an exemplary embodiment of the present disclosure.
FIG. 4 illustrates a detailed, cross-sectional view of an embodiment of a geopolymer composite material according to the present disclosure;
FIGS. 5A and 5B illustrate schematic diagrams of embodiments of prepregs according to the present disclosure, particularly illustrating a prepreg in roll form and a prepreg in sheet form;
FIG. 6 illustrates a flow diagram of a method of manufacturing a geopolymer composite material in accordance with an exemplary aspect of the present disclosure; and
FIG. 7 illustrates a schematic diagram of a process of manufacturing a geopolymer composite material in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first" and "second" may be used interchangeably to distinguish one component from another and are not intended to signify location or importance of the individual components.

The terms "forward" and "aft" refer to relative positions within an engine or vehicle and refer to the normal operational attitude of the engine vehicle. For example, with regard to an engine, forward refers to a position closer to an engine inlet and aft refers to a position closer to an engine nozzle or exhaust.

The term "downstream" refers to the relative direction with respect to fluid flow in a fluid pathway. For example, "downstream" refers to the direction to which the fluid flows.

The singular forms "a", "an", and "the" include plural references unless the context clearly dictates otherwise.

The terms "coupled," "attached to," and the like refer to both direct coupling, fixing, or attaching, as well as indirect coupling, fixing, or attaching through one or more intermediate components or features, unless otherwise specified herein.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Gas turbine engines, often used in many aerospace applications, have an increased demand for high temperature, light weight components. For example, applications having a high temperature resistance, low density, and good mechanical properties have become increasingly popular. Traditionally, PMCs have been utilized to produce light weight structures, whereas CMCs can be used in higher temperature applications. However, such materials have limited structural performance. Moreover, the cost and processing times of CMCs can also be prohibitive when considering applications in high temperature components. In addition, the mass penalty of CMCs as compared to traditional PMCs can be significant and thus their use has been limited.

Therefore, there is a need for materials that aid in manufacturing high temperature components, such as geopolymer composite materials (also referred to herein as polysialates, polysialate composite materials, or variations thereof). Geopolymers generally refer to inorganic, typically ceramic-like alumino-silicates forming long-range, covalently bonded, non-crystalline (amorphous) networks derived through polymerization chemical reactions. This process is different from the extreme processing temperatures used to manufacture conventional ceramic materials. Further, geopolymers are formed using polymineral resins having alumino-silicate binders, which allow them to cure at temperatures below 150 °C. Therefore, this feature allows geopolymers to be manufactured using conventional polymer composite lay-up and bagging techniques, which can be completed using conventional composite laminating and curing equipment. In addition, geopolymers are characterized by low cure temperatures, high temperature resistance, and low density (e.g., as compared to PMCs and CMCs). Geopolymers can be also reinforced with various reinforcing fiber materials, as will be further described herein.

Geopolymer composite materials, however, are chemically aggressive due to their high basicity/high pH (for alkali activated resin systems) or high acidity/low pH prior to cure completion. This characteristic is known to cause corrosion/degradation of unprotected fibers in the matrix, thereby limiting the final material properties (i.e., due to the drop of reinforcement capability). Moreover, conventional geopolymer composite materials may have a limited damage tolerance and are not known to be pre-pregable (i.e., capable of being stored long term without cure completion).

Accordingly, the present disclosure is generally related to geopolymer-based, or polysialate-based, composite materials reinforced with coated fibrous reinforcement materials. Such materials are useful in various applications, including but not limited to, aerospace applications, due to their inherent high temperature resistance, low density, and ease of manufacturing. In particular, such characteristics are useful in high temperature applications, such as from about 300 degrees Celsius (°C) up to 760 °C or even up to about 1000 °C, which corresponds to a general temperature gap between capabilities of PMCs and CMCs. In other words, the geopolymer composite materials of the present disclosure offer sufficient mechanical properties to effectively allow weight reduction as compared to metallic materials, while also being cost-effective. Furthermore, in an embodiment, the geopolymer resin embedded with coated fibrous reinforcement materials is combined into a prepreg, with corrosive damage to the fibrous reinforcement materials being prevented by use of a coating material. In other words, the coating material is configured to offset chemical interactions between the geopolymer resin and the fibrous reinforcement materials in the prepreg form as the corrosive behavior of the geopolymer resin does not occur after complete cure of the resin into a solid matrix.

In particular embodiments, the protective coating material used to cover and/or coat the fibrous reinforcement material(s) may be, e.g., a metallic coating material (such as nickel, chromium, chromium aluminide, iridium, platinum, platinum aluminide, rhenium, copper, or combinations thereof), a non-metallic coating material (such as boron nitride, silicon carbide, silicon nitride), an organic coating material (such as silane, siloxane, polyvinyl acetate, polyvinyl alcohol, etc.) or combinations thereof. In such embodiments, the protective coating material is configured to increase protection of the fibrous reinforcement material(s) from thermal and/or environmental degradation as well as the corrosive behavior of the geopolymer resin in prepreg form. Moreover, in an embodiment, damage tolerance of the geopolymer composite materials is controlled through use of the coating material(s) described herein, thereby promoting a desired level of adhesion between the fibrous reinforcement material(s) and the coating material(s). This in turn provides a mechanism to de-bond the fibrous reinforcement material from the protective coating material at predetermined stress levels, thereby enabling a fiber-slippage-matrix-driven failure instead of fiber-driven failure of the geopolymer composite material.

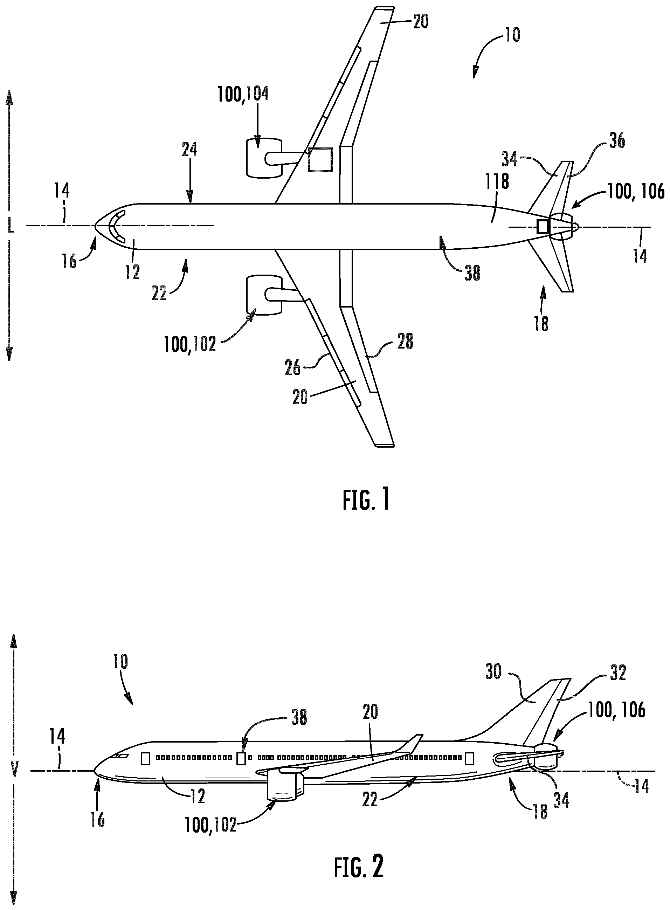

Referring now to the drawings, wherein identical numerals indicate the same elements throughout the figures, FIG. 1 provides a top view of an exemplary aircraft 10 as may incorporate various embodiments of the present disclosure. FIG. 2 provides a port side view of the aircraft 10 as illustrated in FIG. 1. As shown in FIGS. 1 and 2 collectively, the aircraft 10 defines a longitudinal centerline 14 that extends therethrough, a vertical direction V, a lateral direction L, a forward end 16, and an aft end 18.

Moreover, the aircraft 10 includes a fuselage 12, extending longitudinally from the forward end 16 of the aircraft 10 towards the aft end 18 of the aircraft 10, and a pair of wings 20. As used herein, the term "fuselage" generally includes all of the body of the aircraft 10, such as an empennage of the aircraft 10. The first of such wings 20 extends laterally outwardly with respect to the longitudinal centerline 14 from a port side 22 of the fuselage 12 and the second of such wings 20 extends laterally outwardly with respect to the longitudinal centerline 14 from a starboard side 24 of the fuselage 12. Each of the wings 20 for the exemplary embodiment depicted includes one or more leading edge flaps 26 and one or more trailing edge flaps 28. The aircraft 10 further includes a vertical stabilizer 30 having a rudder flap 32 for yaw control, and a pair of horizontal stabilizers 34, each having an elevator flap 36 for pitch control. The fuselage 12 additionally includes an outer surface or skin 38. It should be appreciated, however, that in other exemplary embodiments of the present disclosure, the aircraft 10 may additionally or alternatively include any other suitable configuration of stabilizer that may or may not extend directly along the vertical direction V or horizontal/ lateral direction L.

Referring to FIGS. 1 and 2, the aircraft 10 includes one or more aircraft engines 100. More specifically, for the embodiment depicted in FIGS. 1 and 2, one or more of the aircraft engines 100 may be configured as gas turbine engines, or rather as turbofan jet engines 102, 104 attached to and suspended beneath the wings 20 in an under-wing configuration. Additionally, one or more of the aircraft engines 100 may be configured as a hybrid-electric propulsion engine 106 mounted at the aft end of the aircraft 10.

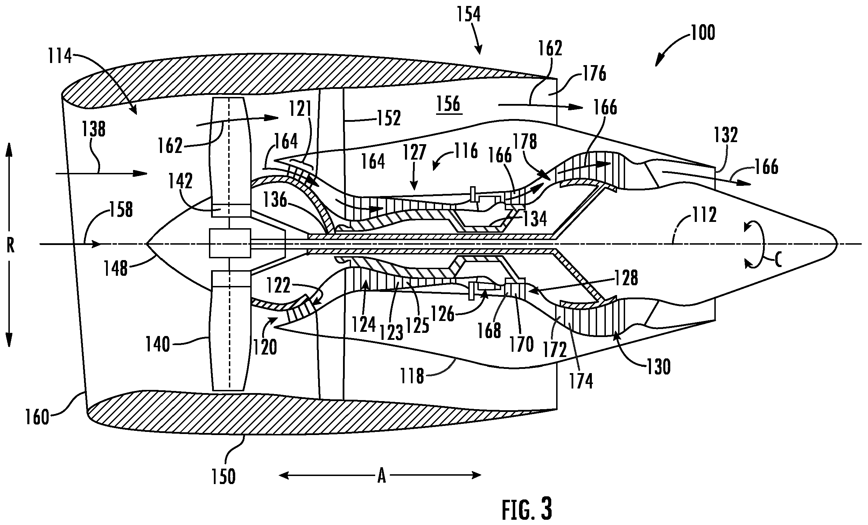

Referring now to FIG. 3, a schematic cross-sectional view of one of the aircraft engines 100, such as the turbofan jet engines 102, 104, in accordance with an exemplary aspect of the present disclosure is illustrated. It should be understood that the aircraft engine 100 of FIG. 3 is described for illustrative purposes only and is not meant to be limiting. Thus, one of ordinary skill in the art would appreciate that the geopolymer cop of the present disclosure described herein can be employed with a purely electric aircraft, a hybrid electric aircraft, or a traditional mechanical aircraft.

As shown in FIG. 3, the aircraft engine 100 defines an axial direction A (extending parallel to a longitudinal centerline 112 provided for reference), a circumferential direction C (extending about the longitudinal centerline 112 and the axial direction A), and a radial direction R. In general, the aircraft engine 100 includes a fan section 114 and a core turbine engine 116 disposed downstream from the fan section 114.

The core turbine engine 116 depicted generally includes a substantially tubular outer casing 118 that defines an annular inlet 120. The outer casing 118 encases, in serial flow relationship, a compressor section including a booster or low pressure (LP) compressor 122 and a high pressure (HP) compressor 124; a combustion section 126; a turbine section including a high pressure (HP) turbine 128 and a low pressure (LP) turbine 130; and a jet exhaust nozzle section 132. A high pressure (HP) shaft or spool 134 drivingly connects the HP turbine 128 to the HP compressor 124. A low pressure (LP) shaft or spool 136 drivingly connects the LP turbine 130 to the LP compressor 122.

For the depicted embodiment, as shown particularly in FIG. 3, the fan section 114 includes a rotatable front hub 148 or nacelle and a plurality of fan blades 140 coupled to a disk 142 or hub in a spaced apart manner. As depicted, fan blades 140 extend outward from disk 142 generally along the radial direction R. The fan blades 140 and disk 142 are together rotatable about the longitudinal centerline 112 by LP shaft 136. As such, the disk 142 may also be referred to as a rotor disk. In some embodiments, a power gearbox having a plurality of gears may be included for stepping down the rotational speed of the LP shaft 136 to a more efficient rotational fan speed.

Referring still to the exemplary embodiment of FIG. 3, the disk 142 is covered by the rotatable front hub 148 aerodynamically contoured to promote an airflow 138 through the plurality of fan blades 140. Additionally, the fan section 114 includes an annular fan casing 150 or outer nacelle that circumferentially surrounds the fan blades 140 and/or at least a portion of the core turbine engine 116. It should be appreciated that fan casing 150 (nacelle) may be configured to be supported relative to the core turbine engine 116 by a plurality of circumferentially spaced outlet guide vanes 152. Moreover, a downstream section 154 of the fan casing 150 may extend over an outer portion of the core turbine engine 116 to define a bypass airflow passage 156 therebetween.

During operation of the aircraft engine 100, a volume of air 158 enters aircraft engine 100 through an associated inlet 160 of the fan casing 150 and/or fan section 114. As the volume of air 158 passes across fan blades 140, a first portion of the air 158 as indicated by arrows 162 is directed or routed into the bypass airflow passage 156 and a second portion of the air 158 as indicated by arrows 164 is directed or routed into the LP compressor 122. The ratio between the first portion of air 162 and the second portion of air 164 is commonly known as a bypass ratio.

The pressure of the second portion of air 164 is then increased as it is routed through the compressor section and into the combustion section 126, where it is mixed with fuel and burned to provide combustion gases 166. More particularly, the compressor section includes the LP compressor 122 and the HP compressor 124 that each may comprise a plurality of compressor stages 121, with each stage 121 including both an annular array or circumferential row of stationary compressor vanes 123 (also referred to as compressor stator vanes 123) and an annular array or circumferential row of rotating compressor blades 125 (also referred to as compressor rotor blades 125) positioned immediately downstream of the compressor vanes 123.

The plurality of compressor blades 125 in the LP compressor 122 are coupled to the LP shaft or spool 136, and the plurality of compressor blades 125 in the HP compressor 124 are coupled to the HP shaft or spool 134. The plurality of compressor vanes 123 in the LP compressor 122 are coupled to a compressor casing, and the plurality of compressor vanes 123 in the HP compressor 124 are coupled to a compressor casing; at least a portion of the compressor vanes 123 in the HP compressor 124 are coupled to a compressor casing 127. In some embodiments, the compressor casing 127 may extend through both the LP compressor 122 and the HP compressor 124 and support all of the compressor vanes 123. In other embodiments, the compressor casing 127 supports only a portion of the compressor vanes 123 and may support only a portion of the compressor vanes 123 in the HP compressor 124. As previously described, as the second portion of air 164 passes through the sequential stages of compressor vanes 123 and blades 125, the volume of air 164 is pressurized, i.e., the pressure of the air 164 is increased prior to combustion with fuel in the combustion section 126 to form the combustion gases 166.

The combustion gases 166 are routed through the HP turbine 128 where a portion of thermal and/or kinetic energy from the combustion gases 166 is extracted via sequential stages of HP turbine stator vanes 168 that are coupled to the outer casing 118 and HP turbine rotor blades 170 that are coupled to the HP shaft or spool 134, thus causing the HP shaft or spool 134 to rotate, which supports operation of the HP compressor 124. The combustion gases 166 are then routed through the LP turbine 130 where a second portion of thermal and kinetic energy is extracted from the combustion gases 166 via sequential stages of LP turbine stator vanes 172 that are coupled to the outer casing 118 and LP turbine rotor blades 174 that are coupled to the LP shaft or spool 136, thus causing the LP shaft or spool 136 to rotate, which supports operation of the LP compressor 122 and/or rotation of the front hub 148.

The combustion gases 166 are subsequently routed through the jet exhaust nozzle section 132 of the core turbine engine 116 to provide propulsive thrust. Simultaneously, the pressure of the first portion of air 162 is substantially increased as the first portion of air 162 is routed through the bypass airflow passage 156 before it is exhausted from a fan nozzle exhaust section 176 of the aircraft engine 100, also providing propulsive thrust. The HP turbine 128, the LP turbine 130, and the jet exhaust nozzle section 132 at least partially define a hot gas path 178 for routing the combustion gases 166 through the core turbine engine 116.

Although the aircraft engine 100 of FIG. 3 is depicted in a turboshaft configuration, it will be appreciated that the teachings of the present disclosure can apply to other types of turbine engines, turbomachines more generally, and other shaft systems. For example, the turbine engine may be another suitable type of gas turbine engine, such as e.g., a turboprop, turbojet, turbofan, aeroderivatives, etc.

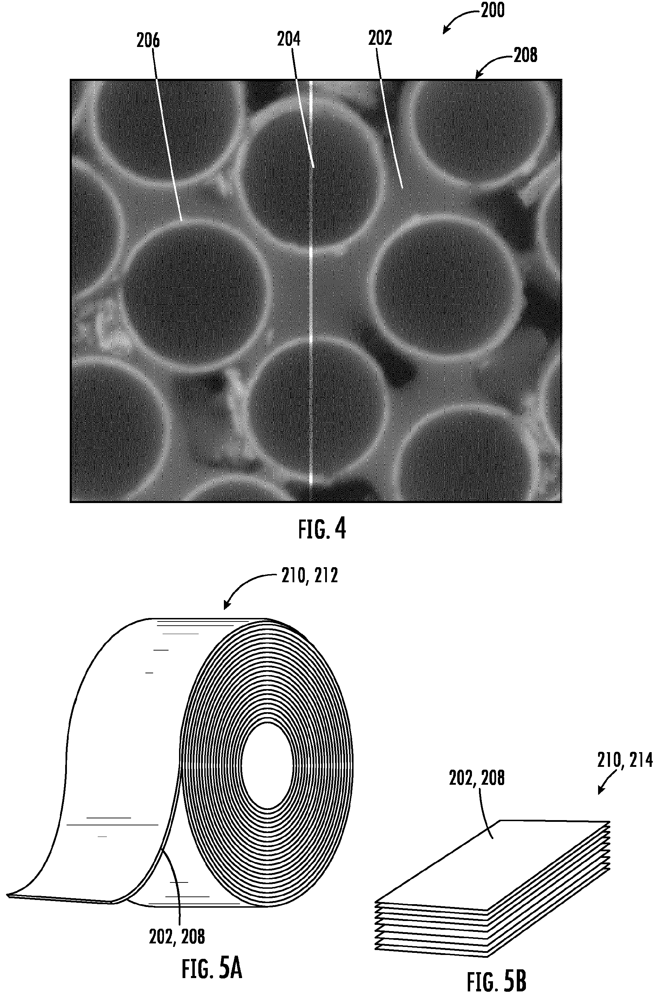

Accordingly, the present disclosure is generally related to geopolymer-based, or polysialate-based, composite materials reinforced with coated fibrous reinforcement materials and methods of making same that can be used to form various components of, e.g., the aircraft engine 100. In particular, and referring to FIG. 4, in an embodiment, a cross-sectional view of an embodiment of a geopolymer composite material 200 according to the present disclosure is illustrated. Furthermore, as shown, the geopolymer composite material 200 is formed of a geopolymer resin 202 and a fibrous reinforcement material 204 embedded in the geopolymer resin 202 for reinforcing the geopolymer resin 202. Moreover, in an embodiment, the fibrous reinforcement material 204 may have a volume fraction content of about 20% up to about 80% in the geopolymer resin 202. In addition, in an embodiment, the geopolymer composite material 200 has a porosity volume content of less than about 50%.

Further, in an embodiment, the fibrous reinforcement material 204 described herein may include unidirectional fibers, multidirectional fibers, one or more woven fabrics, one or more rovings, a braided material, or combinations thereof. Moreover, in an embodiment, the fibrous reinforcement material 204 may include any suitable type of fibers, such as carbon fibers, silicon carbide fibers, glass fibers, quartz fibers, basalt fibers, mineral fibers, aluminum oxide fibers, silicon oxide fibers, a mixture of alumina and silica fibers, boron fibers, or combinations thereof.

Still referring to FIG. 4, as shown, the geopolymer composite material 200 includes a protective coating material 206 covering the fibrous reinforcement material 204 embedded in the geopolymer resin 202 to provide a coated fibrous reinforcement material 208. Thus, as shown in FIGS. 5A and 5B, the geopolymer resin 202 and the coated fibrous reinforcement material 208 are combined together to form a prepreg 210 containing the geopolymer resin 202 pre-impregnated into the coated fibrous reinforcement material 208 and curable into a solid matrix. For example, in an embodiment, as used herein, the solid matrix may include at least one repeating polymeric unit, the at least one repeating polymeric unit comprising at least one of silico-oxide (-Si-O-Si-O-), silico-aluminate (-Si-O-Al-O-), ferro-silico-aluminate (-Fe-O-Si-O-Al-O-) or alumino-phosphate (-Al-O-P-O-), etc.

Referring particularly to FIG. 5A, the prepreg 210 may be in roll form 212. In addition, as shown in FIG. 5B, the prepreg may be in sheet form 214. Still other forms of prepregs may be used and such prepregs may be stored using any suitable means, such as in storage bags and/or under vacuum seal. Such storage means may be tailored, for example, depending on the type of geopolymer resin and/or coated fibrous reinforcement material used to form the prepreg.

Accordingly, the geopolymer composite material 200 of the present disclosure can be utilized to manufacture highly temperature-resistant, light-weight components. For example, the geopolymer composite material 200 of the present disclosure are particularly useful for applications having a high temperature resistance, e.g., up to 1000 Celsius (°C), low density, and good mechanical properties. Further, the geopolymer composite material 200 of the present disclosure may include ceramics derived from inorganic polymers that are processed through one or more polymerization chemical reactions. This process is different from the extreme temperature processing used in manufacturing ceramic materials. Further, the geopolymer composite material 200 of the present disclosure may be formed using polymineral resins having alumino-silicate binders, which allow them to cure at temperatures below 250 °C. Therefore, this feature allows the geopolymer composite material 200 of the present disclosure to be manufactured using conventional polymer composite lay-up and bagging techniques, which can be completed using conventional composite laminating and curing equipment. In addition, the geopolymer composite material 200 of the present disclosure is characterized by a low cure temperature, high temperature resistance, and low density (e.g., as compared to PMCs).

Moreover, as mentioned, the geopolymer composite material 200 of the present disclosure is reinforced with the fibrous reinforcement material 204 that is coated with the protective coating material 206. Thus, since geopolymer composite materials are generally chemically aggressive due to their high basicity/high pH (for alkali activated systems) or high acidity/low pH (for acid activated systems) prior to cure completion, the protective coating material 206 is configured to minimize and/or eliminate corrosion/degradation of unprotected fibers in the matrix, thereby improving the final material properties (which would otherwise be limited i.e., due to the drop of reinforcement capability). In other words, the protective coating material 206 is configured to offset chemical interactions between the geopolymer resin 202 and the fibrous reinforcement material 204 in the prepreg form as the corrosive behavior of the geopolymer resin 202 does not occur after complete cure of the resin into the solid matrix.

In particular embodiments, the protective coating material 206 used to cover and/or coat the fibrous reinforcement material 204 may be, e.g., a metallic coating material (such as nickel, iridium, rhenium, chromium, chromium aluminide, platinum, platinum aluminide, copper, or combinations thereof), a non-metallic coating material (such as boron nitride, silicon carbide, silicon nitride, or combinations thereof), an organic coating material (such as silane, siloxane, polyvinyl acetate, epoxy, urethane, polyvinyl alcohol, polyethylene glycol, etc., or combinations thereof) or combinations thereof. In such embodiments, the protective coating material 206 is configured to increase protection of the fibrous reinforcement material 204 from thermal and/or environmental degradation as well as the corrosive behavior of the geopolymer resin 202 in prepreg form. In addition, the geopolymer composite material 200 of the present disclosure has an improved damage tolerance due to the protective coating material 206 and is capable of being stored long term without cure completion without limiting industrialization of the material. Thus, the coated fibrous reinforcement material 208 also promotes a desired level of adhesion between the fibrous reinforcement material 204 and the protective coating material 206. This in turn provides a mechanism to de-bond the fibrous reinforcement material 204 from the protective coating material 206 at predetermined stress levels, thereby enabling a fiber-slippage-matrix-driven failure instead of fiber-driven failure of the geopolymer composite material 200.

In further embodiments, the geopolymer composite material 200 allows for an increased shelf life/ storage time depending on the geopolymer resin 202, the fibrous reinforcement material 204, and/or the protective coating material 206 used to form the geopolymer composite material 200. For example, the shelf life of the geopolymer composite material 200 may be one (1) year or more. In other embodiments, the shelf life may be up to two (2) years at temperatures below 35 degrees Celsius (°C) without more than a 30% loss of material properties after processing the prepreg into the solid matrix. In still further embodiments, the shelf life of the geopolymer composite material 200 may be more than or less than two (2) years.

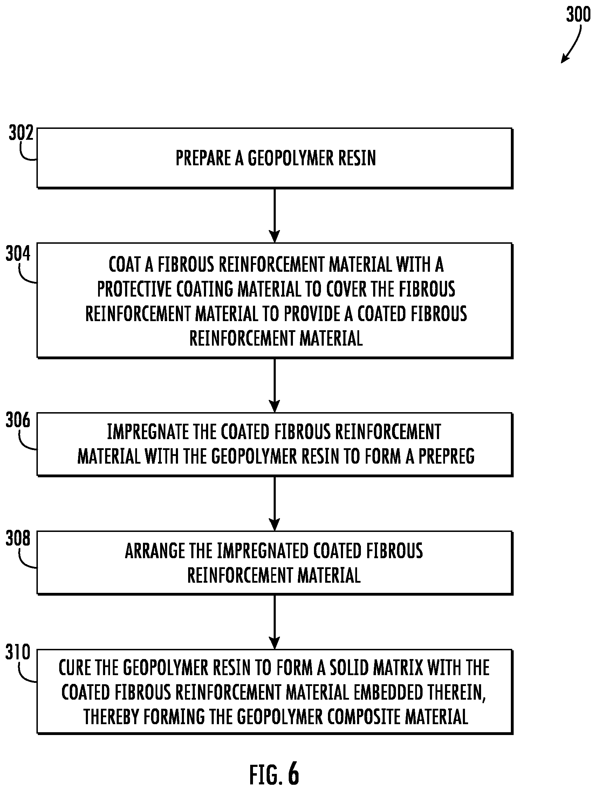

Referring now to FIG. 6, a flow diagram is provided of a method 300 of manufacturing a geopolymer composite material in accordance with an exemplary aspect of the present disclosure is illustrated. Though the method 300 of FIG. 6 may be utilized to manufacture components of the aircraft engine 100 described above with reference to FIGS. 1 through 5, in other exemplary aspects, the method 300 may additionally or alternatively be used to manufacture any suitable geopolymer composite materials. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (302), the method 300 includes preparing a geopolymer resin. As shown at (304), the method 300 includes coating a fibrous reinforcement material with a protective coating material to cover fibrous reinforcement material to provide a coated fibrous reinforcement material. As shown at (306), the method 300 includes impregnating the coated fibrous reinforcement material with the geopolymer resin to form a prepreg. As shown at (308), the method 300 includes arranging the impregnated coated fibrous reinforcement material. For example, in an embodiment, arranging the impregnated coated fibrous reinforcement material may include laying up the impregnated coated fibrous reinforcement material, using filament winding to arrange the impregnated coated fibrous reinforcement material, and/or any other suitable method. As shown at (310), the method 300 includes curing the geopolymer resin to form a solid matrix with the coated fibrous reinforcement material embedded therein, thereby forming the geopolymer composite material.

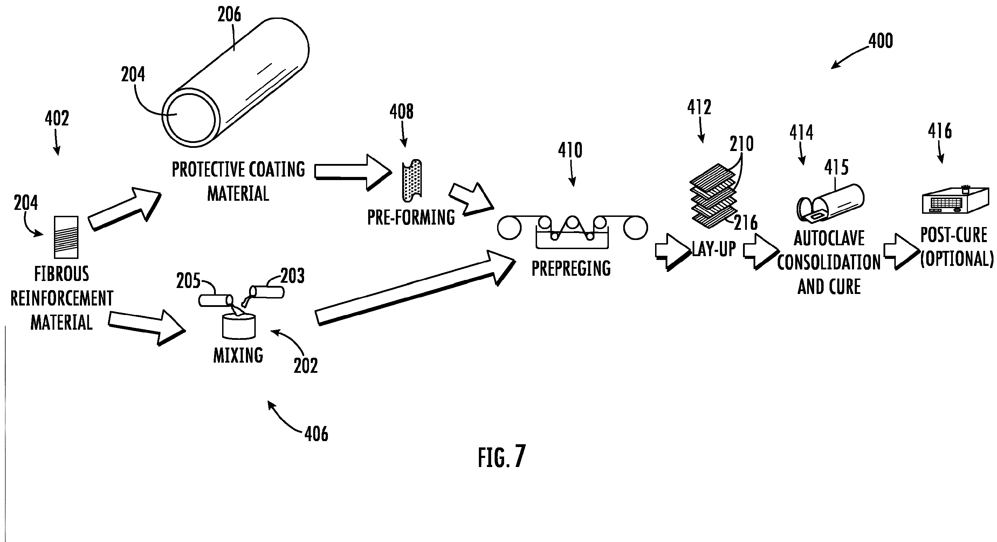

The method 300 of FIG. 6 can be better understood with reference to FIG. 7. In particular, as shown, a schematic diagram of a process 400 of manufacturing a geopolymer composite material in accordance with an exemplary aspect of the present disclosure is illustrated. As shown at (402), the process 400 includes selecting a fibrous reinforcement material 204. As shown at (404), the process 400 includes selecting a protective coating material 206 and coating the fibrous reinforcement material 204 with the protective coating material 206.

In an embodiment, coating the fibrous reinforcement material 204 with the protective coating material 206 may include applying the protective coating material 206 to the fibrous reinforcement material 204 via electrolytic deposition, electroless deposition, chemical vapor deposition, physical vapor deposition, or any other application methods. Further, in an embodiment, the type of application may depend on the geopolymer resin 202, the fibrous reinforcement material 204, and/or the protective coating material 206 selected. For example, in an embodiment, electrolytic deposition, electroless deposition, and/or chemical vapor deposition may be used to apply metallic coating materials. In another embodiment, non-metallic coating materials may be applied by, for example, drawing the fibrous reinforcement material 204 through a solution bath of the protective coating material 206, which condenses on the surface of the fibrous reinforcement material 204. In other embodiments, physical vapor deposition may be used to apply non-metallic coating materials. In still another embodiment, for example, where the protecting coating material 206 is silicon carbide and the fibrous reinforcement material 204 is carbon fibers, silicon metal can be placed on top of the carbon fiber and the temperature can be increased to transition to silicon carbide. In yet another embodiment, organic coating materials can be applied similar to non-metallic coating materials, e.g., by drawing the fibrous reinforcement material 204 through a solution bath of the protective coating material 206.

Referring still to FIG. 7, as shown at (406), the process 400 includes preparing the geopolymer resin 202. For example, in an embodiment, as shown, preparing the geopolymer resin 202 may include mixing a solid material 203 with an activator 205. More specifically, in an embodiment, the activator 205 may include an alkali material, an acidic material, or combinations thereof. In other words, in an embodiment, the geopolymer resin 202 may have chemistry-based cure activation via an alkali route, an acidic route, or combinations thereof. As such, by mixing the solid material 203 with the activator 205, a chemical reaction occurs to produce the geopolymer resin 202. Depending on the type of activator, the geopolymer resin 202 may degrade the fibrous reinforcement material 204. Thus, the fibrous reinforcement material 204 and the respective protective coating material 206 can be selected accordingly to minimize the degradation.

As shown at (408), the process 400 may include the optional step of preforming (e.g., weaving, braiding, etc.) the coated fibrous reinforcement material 208. Further, in an embodiment, as shown at (410), the process 400 includes prepreging the coated fibrous reinforcement material 208 with the geopolymer resin 202. As shown at (412), in an embodiment, the process 400 includes laying up the impregnated coated fibrous reinforcement material (e.g., the prepreg 210). In addition, in an embodiment, the process 400 may include applying a vacuum to the impregnated coated fibrous reinforcement material via vacuum bagging. Furthermore, in an embodiment, the process 400 may include placing one or more porous layers 216 atop a mold and/or adjacent to the impregnated coated fibrous reinforcement material. In such embodiments, the porous layer(s) 216 are configured to aid in process control for volatiles management and/or control bag permeability. In an embodiment, the porous layer(s) 216 described herein may be a thermoplastic-based layer, a coated fiberglass-based layer, or any suitable thermoplastic material and/or membrane acting like material/porous coating for permeability aid to gas release during cure cycle. For example, in an embodiment, the coated fiberglass-based layer may be a fiberglass mat coated with one or more polytetrafluoroethylene (PTFE) layers, wherein the PTFE acts as non-stick agent. In such embodiments, the porous layer(s) 216 is configured to act as a membrane.

In an embodiment, the thermoplastic materials as described herein generally encompass a plastic material or polymer that is reversible in nature. For example, thermoplastic materials typically become pliable or moldable when heated to a certain temperature and return to a more rigid state upon cooling. Further, thermoplastic materials may include amorphous thermoplastic materials and/or semi-crystalline thermoplastic materials. Exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polytetrafluoroethylene (PTFE), poly(butylene terephthalate) (PBT), poly(ethylene terephthalate) (PET), polytrimethylene terephthalate (PTT), polypropylene, poly(phenyl sulfide), polyethylene, polyamide (nylon), polyetherketone, or any other suitable semi-crystalline thermoplastic material.

Amorphous thermoplastic materials as described herein generally encompass a plastic material or polymer that is reversible in nature. For example, amorphous thermoplastic materials typically become pliable or moldable when heated to a certain temperature and return to a more rigid state upon cooling. Some example amorphous thermoplastic materials may generally include, but are not limited to, styrenes, vinyls, cellulosics, polyesters, acrylics, polysulfones, and/or imides. More specifically, exemplary amorphous thermoplastic materials may include polystyrene, acrylonitrile butadiene styrene (ABS), poly(methyl methacrylate) (PMMA), polyethylene terephthalate glycol (PETG), polycarbonate, poly(vinyl acetate), amorphous polyamide, poly(vinyl chloride) (PVC), poly(vinylidene chloride), polyurethane, or any other suitable amorphous thermoplastic material.

Referring still to FIG. 7, as shown at (414), the process 400 includes curing the impregnated coated fibrous reinforcement material to form the solid matrix of the geopolymer composite material. In particular, as shown, curing the impregnated coated fibrous reinforcement material may include autoclaving the impregnated coated fibrous reinforcement material via an autoclave system 415. For example, in an embodiment, the autoclave system 415 is configured to apply temperatures of up to about 400 Celsius (°C) and pressures of less than about 4000 kilopascals (kPa) to cure the impregnated coated fibrous reinforcement material. In addition, in an embodiment, as shown at (416), the process 400 may include post-curing the impregnated coated fibrous reinforcement material via temperatures of up to about 1000 Celsius (°C).

The invention is defined by the claims.

## Claims

1. A geopolymer composite material (200), comprising:
a geopolymer resin (202); and
a coated fibrous reinforcement material (208) impregnated with the geopolymer resin (202),
wherein the coated fibrous reinforcement material (208) comprises a protective coating material (206) covering a fibrous reinforcement material (204),
wherein the geopolymer composite material (200) is in the form of a prepeg (210), and
wherein the geopolymer resin (202) is capable of being cured into a solid matrix having the coated fibrous reinforcement material (208) embedded therein.

2. The geopolymer composite material (200) of claim 1, wherein the solid matrix comprises at least one repeating polymeric unit, the at least one repeating polymeric unit comprising at least one of silico-oxide (-Si-O-Si-O-), silico-aluminate (-Si-O-Al-O-), ferro-silico-aluminate (-Fe-O-Si-O-Al-O-), or alumino-phosphate (-Al-O-P-O-).

3. The geopolymer composite material (200) of any of claims 1-2,
wherein the fibrous reinforcement material (204) comprises a volume fraction content of between about 20% up to about 80% in the geopolymer resin (202).

4. The geopolymer composite material (200) of any of claims 1-3,
wherein the fibrous reinforcement material (204) comprises a porosity volume content of less than about 50% of a porosity of the geopolymer composite material (200).

5. The geopolymer composite material (200) of any of claims 1-4,
wherein the fibrous reinforcement material (204) comprises at least one of chopped fibers, unidirectional fibers, multidirectional fibers, one or more woven fabrics, one or more rovings, a braided material, or combinations thereof.

6. The geopolymer composite material (200) of any of claims 1-5,
wherein the fibrous reinforcement material (204) comprises at least one of carbon fiber, silicon carbide fiber, glass fiber, quartz fiber, basalt fiber, mineral fiber, aluminum oxide fiber, silicon oxide fiber, a mixture of alumina and silica fibers, boron fibers, or combinations thereof.

7. The geopolymer composite material (200) of any of claims 1-6,
wherein the protective coating material (206) comprises at least one of a metallic coating material, a non-metallic coating material, an organic coating material, or combinations thereof.

8. The geopolymer composite material (200) of claim 7, wherein the metallic coating material comprises at least one of nickel, iridium, rhenium, chromium, chromium aluminide, platinum, platinum aluminide, copper, or combinations thereof.

9. The geopolymer composite material (200) of any of claims 7-8,
wherein the non-metallic coating material comprises at least one of boron nitride, silicon carbide, silicon nitride, or combinations thereof.

10. The geopolymer composite material (200) of any of claims 7-9,
wherein the organic coating material comprises at least one of silane, siloxane, polyvinyl acetate, epoxy, urethane, polyvinyl alcohol, polyethylene glycol, or combinations thereof.

11. A method of manufacturing a geopolymer composite material (200), the method comprising:
preparing a geopolymer resin (202);
coating a fibrous reinforcement material (204) with a protective coating material (206) to provide a coated fibrous reinforcement material (208);
impregnating the coated fibrous reinforcement material (208) with the geopolymer resin (202) to form a prepreg (210);
laying up the impregnated coated fibrous reinforcement material (208); and
curing the impregnated coated fibrous reinforcement material (208) to form a solid matrix of the geopolymer composite material (200).

12. The method of claim 11, wherein preparing the geopolymer resin (202) further comprises mixing a solid material with an activator, the activator comprising at least one of an alkali material, an acidic material, or combinations thereof.

13. The method of any of claims 11-12, wherein coating the fibrous reinforcement material (204) with the protective coating material (206) to provide the coated fibrous reinforcement material (208) further comprises:
applying the protective coating material (206) to the fibrous reinforcement material (204) via at least one of: electrolytic deposition, electroless deposition, chemical vapor deposition, or physical vapor deposition.

14. The method of any of claims 11-13, wherein curing the impregnated coated fibrous reinforcement material (208) to form the solid matrix of the geopolymer composite material (200) further comprises autoclaving the impregnated coated fibrous reinforcement material (208) via an autoclave system.

15. The method of claim 14, wherein the autoclave system applies temperatures of up to about 400 Celsius (°C) and pressures of less than about 4000 kilopascals (kpa).

## Patentansprüche

1. Geopolymer-Verbundwerkstoff (200), umfassend:
ein Geopolymerharz (202); und
ein beschichtetes faseriges Verstärkungsmaterial (208), das mit dem Geopolymerharz (202) imprägniert ist,
wobei das beschichtete faserige Verstärkungsmaterial (208) ein Schutzbeschichtungsmaterial (206) umfasst, das ein faseriges Verstärkungsmaterial (204) bedeckt,
wobei der Geopolymer-Verbundwerkstoff (200) in Form eines Prepregs (210) vorliegt und
wobei das Geopolymerharz (202) zu einer festen Matrix aushärtbar ist, in der das beschichtete faserige Verstärkungsmaterial (208) eingebettet ist.

2. Geopolymer-Verbundwerkstoff (200) nach Anspruch 1, wobei die feste Matrix mindestens eine sich wiederholende polymere Einheit umfasst, wobei die mindestens eine sich wiederholende polymere Einheit mindestens eine der folgenden Einheiten umfasst: Silicooxid-Einheit (-Si-O-Si-O-), Silicoaluminat-Einheit (-Si-O-Al-O-), Ferro-Silicoaluminat-Einheit (-Fe-O-Si-O-Al-O-) oder Aluminophosphat-Einheit (-Al-O-P-O-).

3. Geopolymer-Verbundwerkstoff (200) nach einem der Ansprüche 1 bis 2, wobei das faserige Verstärkungsmaterial (204) einen Volumenanteil von etwa 20 % bis etwa 80 % im Geopolymerharz (202) aufweist.

4. Geopolymer-Verbundwerkstoff (200) nach einem der Ansprüche 1 bis 3, wobei das faserige Verstärkungsmaterial (204) einen Porositätsvolumenanteil von weniger als etwa 50 % der Porosität des Geopolymer-Verbundwerkstoffs (200) aufweist.

5. Geopolymer-Verbundwerkstoff (200) nach einem der Ansprüche 1 bis 4, wobei das faserige Verstärkungsmaterial (204) mindestens eines der Folgenden umfasst: zerkleinerte Fasern, unidirektionale Fasern, multidirektionale Fasern, ein oder mehrere Gewebe, ein oder mehrere Rovings, geflochtenes Material oder Kombinationen davon.

6. Geopolymer-Verbundwerkstoff (200) nach einem der Ansprüche 1 bis 5, wobei das faserige Verstärkungsmaterial (204) mindestens eines der Folgenden umfasst: Kohlenstofffasern, Siliziumkarbidfasern, Glasfasern, Quarzfasern, Basaltfasern, Mineralfasern, Aluminiumoxidfasern, Siliziumoxidfasern, eine Mischung aus Aluminiumoxid- und Siliziumoxidfasern, Borfasern oder Kombinationen davon.

7. Geopolymer-Verbundwerkstoff (200) nach einem der Ansprüche 1 bis 6, wobei das Schutzbeschichtungsmaterial (206) mindestens eines der Folgenden umfasst: metallisches Beschichtungsmaterial, nichtmetallisches Beschichtungsmaterial, organisches Beschichtungsmaterial oder Kombinationen davon.

8. Geopolymer-Verbundwerkstoff (200) nach Anspruch 7, wobei das metallische Beschichtungsmaterial mindestens eines der Folgenden umfasst: Nickel, Iridium, Rhenium, Chrom, Chromaluminid, Platin, Platinaluminid, Kupfer oder Kombinationen davon.

9. Geopolymer-Verbundwerkstoff (200) nach einem der Ansprüche 7 oder 8, wobei das nichtmetallische Beschichtungsmaterial mindestens eines der Folgenden umfasst: Bornitrid, Siliziumkarbid, Siliziumnitrid oder Kombinationen davon.

10. Geopolymer-Verbundwerkstoff (200) nach einem der Ansprüche 7 bis 9, wobei das organische Beschichtungsmaterial mindestens eines der Folgenden umfasst: Silan, Siloxan, Polyvinylacetat, Epoxidharz, Urethan, Polyvinylalkohol, Polyethylenglykol oder Kombinationen davon.

11. Verfahren zum Herstellen eines Geopolymer-Verbundwerkstoffs (200), umfassend:
Vorbereiten eines Geopolymerharzes (202);
Beschichten eines faserigen Verstärkungsmaterials (204) mit einem Schutzbeschichtungsmaterial (206), um ein beschichtetes faseriges Verstärkungsmaterial (208) zu erhalten;
Imprägnieren des beschichteten faserigen Verstärkungsmaterials (208) mit dem Geopolymerharz (202), um ein Prepreg (210) zu bilden;
lagenweises Ablegen des imprägnierten beschichteten faserigen Verstärkungsmaterials (208); und
Aushärten des imprägnierten beschichteten faserigen Verstärkungsmaterials (208), um eine feste Matrix des Geopolymer-Verbundwerkstoffs (200) zu bilden.

12. Verfahren nach Anspruch 11, wobei das Vorbereiten des Geopolymerharzes (202) ferner das Mischen eines festen Materials mit einem Aktivator umfasst, wobei der Aktivator mindestens eines der Folgenden umfasst: alkalisches Material, saures Material oder Kombinationen davon.

13. Verfahren nach einem der Ansprüche 11 bis 12, wobei das Beschichten des faserigen Verstärkungsmaterials (204) mit dem Schutzbeschichtungsmaterial (206) zur Bereitstellung des beschichteten faserigen Verstärkungsmaterials (208) ferner umfasst:
das Auftragen des Schutzbeschichtungsmaterials (206) auf das faserige Verstärkungsmaterial (204) durch mindestens eines der folgenden Verfahren: elektrolytische Abscheidung, stromlose Abscheidung, chemische Gasphasenabscheidung oder physikalische Gasphasenabscheidung.

14. Verfahren nach einem der Ansprüche 11 bis 13, wobei das Aushärten des imprägnierten beschichteten faserigen Verstärkungsmaterials (208) zum Bilden der festen Matrix des Geopolymer-Verbundwerkstoffs (200) ferner das Autoklavieren des imprägnierten beschichteten faserigen Verstärkungsmaterials (208) mittels eines Autoklavsystems umfasst.

15. Verfahren nach Anspruch 14, wobei das Autoklavsystem Temperaturen von bis zu etwa 400 Grad Celsius (°C) und Drücke von weniger als etwa 4000 Kilopascal (kPa) anwendet.

## Revendications

1. Matériau composite géopolymère (200), comprenant :
une résine géopolymère (202) ; et
un matériau de renforcement fibreux revêtu (208) imprégné de la résine géopolymère (202),
dans lequel le matériau de renforcement fibreux revêtu (208) comprend un matériau de revêtement protecteur (206) recouvrant un matériau de renforcement fibreux (204),
dans lequel le matériau composite géopolymère (200) se présente sous la forme d'un préimprégné (210), et
dans lequel la résine géopolymère (202) peut être durcie pour former une matrice solide dans laquelle est incorporé le matériau de renforcement fibreux revêtu (208).

2. Matériau composite géopolymère (200) de la revendication 1, dans lequel la matrice solide comprend au moins une unité polymère répétitive, la au moins une unité polymère répétitive comprenant au moins l'un parmi l'oxyde de silicium (-Si-O-Si-O-), le silico-aluminate (-Si-O-Al-O-), le ferrosilico-aluminate (-Fe-O-Si-O-Al-O-) ou l'alumine-phosphate (-Al-O-P-O-).

3. Matériau composite géopolymère (200) selon l'une des revendications 1-2, dans lequel le matériau de renforcement fibreux (204) comprend une teneur en fraction volumique comprise entre environ 20 % et environ 80 % par rapport à la résine géopolymère (202).

4. Matériau composite géopolymère (200) selon l'une des revendications 1-3, dans lequel le matériau de renforcement fibreux (204) comprend une teneur en volume de porosité inférieure à environ 50 % de la porosité du matériau composite géopolymère (200).

5. Matériau composite géopolymère (200) selon l'une des revendications 1-4, dans lequel le matériau de renforcement fibreux (204) comprend au moins l'un parmi des fibres coupées, des fibres unidirectionnelles, des fibres multidirectionnelles, un ou plusieurs tissus, une ou plusieurs mèches, un matériau tressé ou des combinaisons de ceux-ci.

6. Matériau composite géopolymère (200) selon l'une des revendications 1-5, dans lequel le matériau de renforcement fibreux (204) comprend au moins l'un parmi une fibre de carbone, une fibre de carbure de silicium, une fibre de verre, une fibre de quartz, une fibre de basalte, une fibre minérale, une fibre d'oxyde d'aluminium, une fibre d'oxyde de silicium, un mélange de fibres d'alumine et de silice, des fibres de bore ou des combinaisons de celles-ci.

7. Matériau composite géopolymère (200) selon l'une des revendications 1-6, dans lequel le matériau de revêtement protecteur (206) comprend au moins l'un parmi un matériau de revêtement métallique, un matériau de revêtement non métallique, un matériau de revêtement organique ou des combinaisons de ceux-ci.

8. Matériau composite géopolymère (200) selon la revendication 7, dans lequel le matériau de revêtement métallique comprend au moins l'un parmi le nickel, l'iridium, le rhénium, le chrome, l'aluminure de chrome, le platine, l'aluminure de platine, le cuivre ou des combinaisons de ceux-ci.

9. Matériau composite géopolymère (200) selon l'une des revendications 7-8, dans lequel le matériau de revêtement non métallique comprend au moins l'un parmi le nitrure de bore, le carbure de silicium, le nitrure de silicium ou des combinaisons de ceux-ci.

10. Matériau composite géopolymère (200) selon l'une des revendications 7-9, dans lequel le matériau de revêtement organique comprend au moins l'un parmi le silane, le siloxane, l'acétate de polyvinyle, l'époxy, l'uréthane, l'alcool polyvinylique, le polyéthylène glycol ou des combinaisons de ceux-ci.

11. Procédé de fabrication d'un matériau composite géopolymère (200), le procédé comprenant :
la préparation d'une résine géopolymère (202) ;
le revêtement d'un matériau de renforcement fibreux (204) avec un matériau de revêtement protecteur (206) pour obtenir un matériau de renforcement fibreux revêtu (208) ;
l'imprégnation du matériau de renfort fibreux revêtu (208) avec la résine géopolymère (202) pour former un préimprégné (210) ;
la mise en place du matériau de renfort fibreux revêtu imprégné (208) ; et
le durcissement du matériau de renfort fibreux revêtu imprégné (208) pour former une matrice solide du matériau composite géopolymère (200).

12. Procédé selon la revendication 11, dans lequel la préparation de la résine géopolymère (202) comprend en outre le mélange d'un matériau solide avec un activateur, l'activateur comprenant au moins un matériau alcalin, un matériau acide ou des combinaisons de ceux-ci.

13. Procédé selon l'une des revendications 11-12, dans lequel le revêtement du matériau de renforcement fibreux (204) avec le matériau de revêtement protecteur (206) pour fournir le matériau de renforcement fibreux revêtu (208) comprend en outre :
l'application du matériau de revêtement protecteur (206) sur le matériau de renforcement fibreux (204) par au moins l'un des procédés suivants : dépôt électrolytique, dépôt non électrolytique, dépôt chimique en phase vapeur ou dépôt physique en phase vapeur.

14. Procédé selon l'une des revendications 11-13, dans lequel le durcissement du matériau de renforcement fibreux revêtu imprégné (208) pour former la matrice solide du matériau composite géopolymère (200) comprend en outre l'autoclavage du matériau de renforcement fibreux revêtu imprégné (208) au moyen d'un système d'autoclave.

15. Procédé selon la revendication 14, dans lequel le système d'autoclave applique des températures allant jusqu'à environ 400 degrés Celsius (°C) et des pressions inférieures à environ 4 000 kilopascals (kPa).
